# EUROPÄISCHE PATENTANMELDUNG

(11) **EP 4 782 177 A1**
(43) Veröffentlichungstag der Anmeldung: **29.07.2026**
(21) Anmeldenummer: 26150071.4
(22) Anmeldetag: 02.01.2026
(51) Int. Cl.: B29C 45/84

(54) **SCHUTZABDECKUNG FÜR EINE MASCHINE SOWIE DAMIT VERSEHENE SPRITZGIESSMASCHINE**

(30) Priorität: 08.01.2025 DE 102025100375
(71) Anmelder: ARBURG GmbH + Co KG, 72290 Loßburg (DE)
(72) Erfinder: HERMANN, Andreas, 78628 Rottweil (DE)
(74) Vertreter: RPK Patenanwälte Reinhardt und Kaufmann Partnerschaft mbB (Pforzheim)

(57) **Zusammenfassung**

Schutzabdeckung (10) für eine Maschine, insbesondere Spritzgießmaschine, umfassend mindestens zwei Laufwagen (20) und mindestens zwei Abdeckungssegmente (30). Die Laufwagen (20) sind entlang einer ersten Achse (40) translatorisch bewegbar an einer ersten Aufnahme (70) der Maschine lagerbar und jeweils ein Abdeckungssegment (30) ist an jeweils einem Laufwagen (20) befestigt und in jeweils einer zweiten Achse (50) im rechten Winkel zur ersten Achse (40) rotatorisch bewegbar. Jeweils zwei Abdeckungssegmente (30) sind entlang einer dritten Achse (60) parallel zur zweiten Achse (50) beweglich miteinander verbunden und eines der mindestens zwei Abdeckungssegmente (30) ist mit einer der Verbindung der Abdeckungssegmente gegenüberliegenden Seite an einer zweiten Aufnahme (80) der Maschine lösbar lagerbar. (Fig. 1)

## Beschreibung

Die vorliegende Erfindung betrifft eine Schutzabdeckung für eine Maschine, insbesondere eine Spritzgießmaschine, mit den Merkmalen gemäß dem Oberbegriff des Anspruches 1 sowie eine damit versehene Spritzgießmaschine mit den Merkmalen des Anspruches 9.

Herkömmliche Schutzabdeckungen für Maschinen, insbesondere Maschinen zur Verarbeitung von Kunststoffen und anderen plastifizierbaren Materialien wie Spritzgießmaschinen, weisen zum Schutz eines Bedieners Schutzabdeckungen auf, die insbesondere beim Betrieb der Maschine den Bediener vor Verletzungen schützen sollen. Diese Schutzabdeckungen beeinträchtigen in der Regel aber die Zugänglichkeit zur Maschine für den Bediener z.B. bei Wartung und Montage dadurch, dass es feste, unbewegliche Bestandteile der Schutzabdeckung gibt.

Ein Beispiel dafür ist z. B. in der DE 10 2012 004 018 B4 zu finden. Darin beschrieben ist eine horizontale Spritzgießmaschine mit einer Schließeinheit, einer Spritzeinheit und einer Schutzabdeckung für die Spritzgießmaschine. Die Schutzabdeckung umfasst eine feste trennende Schutzeinrichtung und eine beweglichen trennende Schutzeinrichtung. Dabei weist die beweglich trennende Schutzeinrichtung eine zumindest zweiteilige Schutztür aus einem ersten Türabschnitt und einem zweiten Türabschnitt auf, wobei die beiden Türabschnitte verschiebbar sind und zusammen in einer geschlossenen Stellung eine Zugangsöffnung in der Schutzabdeckung vollständig abdecken. In einer geöffneten Stellung des ersten Türabschnitts sind beide Türabschnitte hintereinander angeordnet, wobei einer der beiden Türabschnitte den anderen der beiden Türabschnitte zumindest teilweise verdeckt. Die feste trennende Schutzeinrichtung weist einen starren Rahmen auf, an dem beide Türabschnitte verschiebbar gelagert sind.

Aus der JP 2003-276071 A ist eine Spritzgießmaschine bekannt, die mit platzsparenden Sicherheitsabdeckungen für eine Formschließeinheit ausgestattet ist. Die Formschließeinheit ist auf einem Maschinenfuß angeordnet. Die Sicherheitsabdeckungen und Führungsschienen einer Sicherheitstür sind am Maschinenfuß oder am Rahmen der Spritzgießmaschine so angebracht, dass sie durch Veränderung ihrer Höhe parallel verschieblich sind. Drehbare Führungsrollen befinden sich an den Sicherheitsabdeckungen bzw. der Sicherheitstür. Wenn die Sicherheitsabdeckungen durch Schieben geöffnet werden, werden sie so untergebracht, dass sie die Sicherheitstür überlappen.

Der Erfindung liegt daher die Aufgabe zugrunde. eine Schutzabdeckung anzugeben, die den Bediener vor Gefahren schützt, ohne ihn in der Zugänglichkeit zur Maschine einzuschränken, und die mit möglichst wenig verschiedenen Baugruppen für viele unterschiedliche Baureihen von Maschinen einsetzbar ist und somit Kosten spart.

Dies wird mit einer Schutzabdeckung für eine Maschine, insbesondere Spritzgießmaschine, umfassend mindestens zwei Laufwagen und mindestens zwei Abdeckungssegmente, mit den Merkmalen des Patentanspruchs 1 oder durch eine damit versehene Spritzgießmaschine mit den Merkmalen des Anspruches 9 gelöst.

Dabei sind die mindestens zwei Laufwagen entlang einer ersten Achse translatorisch bewegbar an einer ersten Aufnahme der Maschine lagerbar. Jeweils ein Abdeckungssegment ist an jeweils einem Laufwagen befestigt und jeweils um eine zweite Achse im rechten Winkel zur ersten Achse rotatorisch bewegbar. Jeweils zwei der an dem jeweils einen Laufwagen befestigten Abdeckungssegmente sind entlang einer dritten Achse, die parallel zur zweiten Achse angeordnet ist, beweglich miteinander über eine Verbindung verbunden. Eines der mindestens zwei Abdeckungssegmente ist mit einer der Verbindung der Abdeckungssegmente gegenüberliegenden Seite an einer zweiten Aufnahme der Maschine lösbar lagerbar. Durch diese Ausgestaltung bietet die Schutzabdeckung im gefalteten Zustand vorteilhaft eine maximale Zugänglichkeit. Gleichzeitig können wenige identische Komponenten und insbesondere Anschlusselemente an die Maschine verwendet werden, so dass ein Skalierung der Schutzabdeckung je nach Maschinengröße vorteilhaft möglich ist.

Vorteilhafte Weiterbildungen sind Gegenstand der abhängigen Patentansprüche.

In einer bevorzugten vorteilhaft die Anzahl der Bauteile reduzierenden und die Bedienbarkeit verbessernden Ausführungsform der Schutzabdeckung ist die erste Aufnahme der Maschine eine gemeinsame Führung für die mindestens zwei Laufwagen, insbesondere eine Führungsschiene oder Führungsstange, wobei die mindestens zwei Laufwagen mittels Wälzlagern an der Führung bewegbar sind. Diese Führung ist vorzugsweise eine horizontale auf dem Maschinenständer und unterhalb der Schutzabdeckung angeordnete Führung.

Bevorzugterweise verbessert eine weitere Ausführungsform der Schutzabdeckung vorteilhaft deren Lösbarkeit von der zweiten Aufnahme dadurch, dass die zweite Aufnahme der Maschine mindestens eine Steckverbindung mit dem Abdeckungssegment bildet, insbesondere eine Bolzen-/Buchsen-Verbindung. Vorzugsweise handelt es sich bei der zweiten Aufnahme um eine vertikale Aufnahme am stationären Formträger.

Dadurch, dass die jeweils zwei Abdeckungssegmente an der vorzugsweise vertikalen Verbindung mittels mindestens einem Scharnier, insbesondere Scharnierband, miteinander beweglich verbunden sind, wird vorteilhaft bedarfsweise in einer anderen Ausführungsform der Schutzabdeckung eine leichte und stabile gegenseitige Beweglichkeit der beiden miteinander verbundenen Abdeckungssegmente ermöglicht.

Eine bevorzugte Ausführungsform der Schutzabdeckung vermindert vorteilhaft die Gefahr einer unerwünschten Faltung der Schutzabdeckung aus dem vollständig gefalteten Zustand heraus dadurch, dass die miteinander verbundenen Abdeckungssegmente zusätzlich mittels einer Feder verbunden sind, wobei die Feder in einem Zustand vorgespannt ist, in dem die Abdeckungssegmente entlang der ersten Achse eine maximal große Fläche aufweisen, sich also vorzugsweise in einem gestreckten Zustand der Faltung befinden.

Bevorzugt wird in einer weiteren Ausführungsform der Schutzabdeckung in deren vollständig entfalteten Zustand vorteilhaft eine Faltung der Schutzabdeckung in eine unerwünschte Richtung dadurch vermieden, dass am Laufwagen ein Endanschlag für das Abdeckungssegment angeordnet ist, an das es anschlägt, wenn die miteinander verbundenen Abdeckungssegmente in einem Zustand sind, in dem die Abdeckungssegmente entlang der ersten Achse eine maximal große Fläche aufweisen, sich also in ihrer gestreckten Schutzposition befinden.

Eine andere bevorzugte Ausführungsform der Schutzabdeckung vermindert vorteilhaft die Gefahr einer unerwünschten Faltung der Schutzabdeckung aus dem vollständig entfalteten Zustand dadurch, dass das Abdeckungssegment mit einem ersten Teil einer Rastverbindung am Laufwagen in einem zweiten Teil der Rastverbindung lösbar eingerastet ist, wenn die miteinander verbundenen Abdeckungssegmente in einem Zustand sind, in dem sie entlang der ersten Achse eine maximal große Fläche aufweisen, sich also in ihrer Schutzposition befinden.

In einer weiteren bevorzugten Ausführungsform der Schutzabdeckung wird vorteilhaft die Gefahr einer unerwünschten Faltung der Schutzabdeckung im vollständig entfalteten Zustand dadurch dauerhaft vermindert, dass das Abdeckungssegment in einem Zustand, in dem es entlang der ersten Achse eine maximal große Fläche aufweist, an der zweiten Achse axial vorgespannt und daran rotatorisch bewegbar ist, wobei ein bedarfsweise lösbarer Spannstift am Laufwagen ein Lösen der axialen Vorspannung verhindert.

Die beschriebenen Vorteile machen sich auch an einer mit solch einer Schutzabdeckung ausgestatteten Spritzgießmaschine zur Verarbeitung von Kunststoffen und anderer plastifizierbarer Materialien bemerkbar.

Vorzugsweise ist die Schutzabdeckung der Spritzgießeinheit der Spritzgießmaschine zugeordnet, so dass diese vorteilhaft vor einem Zugriff geschützt sicher betrieben werden kann und gleichzeitig für Wartung und Montage z.B. eines anderen Plastifizierzylinders oder zum Wechsel einer Förderschnecke schnell und leicht zugänglich ist.

Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Die Erfindung wird nun anhand eines Ausführungsbeispiels näher erläutert. Es zeigen:
- Fig. 1, 2: eine dreidimensionale Ansicht auf die Bedienerseite eines einer Spritz-gießeinheit zugeordneten Teils einer Spritzgießmaschine mit einer geschlossenen bzw. geöffneten Schutzabdeckung,
- Fig. 3: die Schutzabdeckung mit einer Detailvergrößerung einer Verbindungsfeder,
- Fig. 4: eine Detailvergrößerung eines Laufwagens mit einem daran angeordneten Abdeckungssegment.

### Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

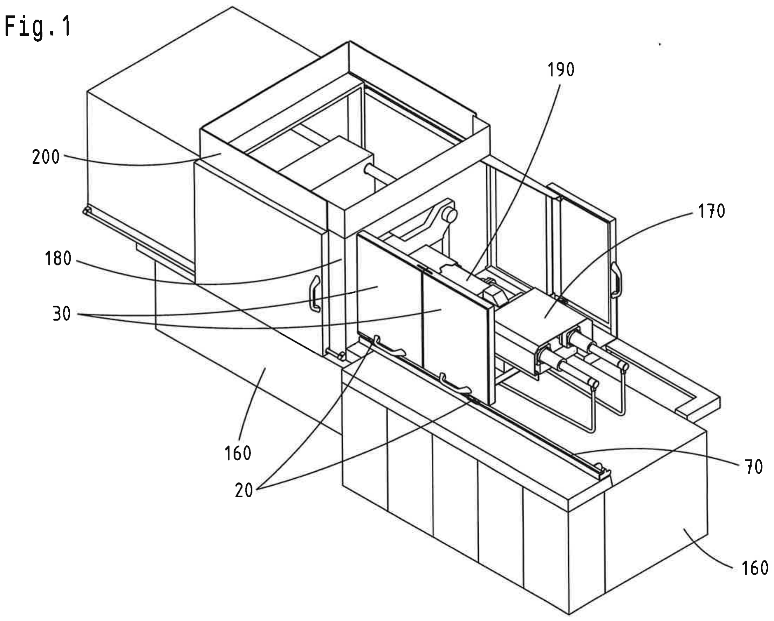

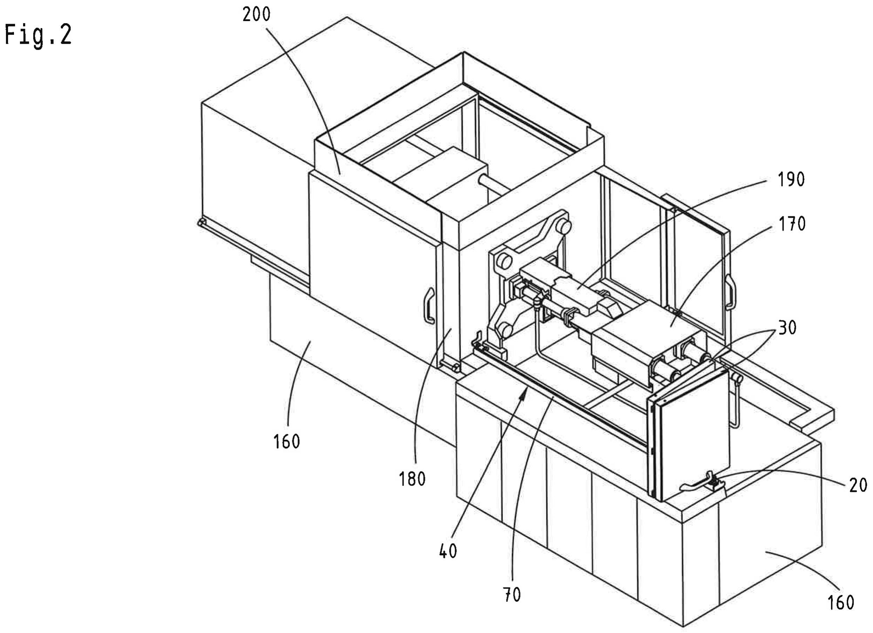

Aufbau und Betrieb einer Maschine zur Verarbeitung von Kunstsoffen und anderer plastifizierbarer Materialen wie eine Spritzgießmaschine sind einer Fachperson grundsätzlich bekannt. Die Fig. 1 und 2 zeigen den einer Spritzgießeinheit 170 zugeordneten Teil einer Spritzgießmaschine in einer dreidimensionalen Ansicht auf die Bedienerseite. Auf der linken Site ist in den Figuren noch die Formschließeinheit 180 mit stationärem Formträger 200 zu erkennen. Spritzgießeinheit 170 und Formschließeinheit 180 sind auf einem Maschinenständer 160 angeordnet.

Der Spritzgießmaschine werden Kunststoffe oder andere plastifizierbare Materialien zugeführt, die in einem Plastifizierzylinder 190 gemischt, plastifiziert und homogenisiert werden. Während des Plastifizierungsvorgangs wird vor einem Fördermittel plastifiziertes Material im Plastifizierzylinder aufdosiert und in einen Formhohlraum einer zeichnerisch nicht dargestellten Spritzgießform eingespritzt, die sich in Fig. 1 und 2 auf der linken Seite auf der Rückseite des stationären Formträgers 200 in der Formschließeinheit 180 befindet. In diesem Moment ist die Spritzgießform durch die Formschließeinheit geschlossen. Sobald das eingespritzte plastifizierte Material im Formhohlraum ausgehärtet ist, wird mittels der Formschließeinheit 180 die Spritzgießform wieder geöffnet, sodass ein fertige Spritzteil entnommen werden kann. Dieser Prozess erfolgt zyklisch.

In den Fig. 1 und 2 befindet sich auf dem Maschinenständer 160 und aus Sicht eines Bedieners vor der Spritzgießeinheit 170 eine Schutzabdeckung 10 mit Abdeckungssegmenten 30, die zum Schutz eines Bedieners den Bereich der Spritzgießeinheit im Gebrauchszustand der Fig. 1 vor einem Zugriff durch den Bediener schützen. Diese Abdeckungssegmente 30 sind auf einer Führung 70 mittels Laufwagen 20 geführt und abgestützt. In Fig. 1 befinden sich diese Abdeckungssegmente 30 in ihre gestreckten Lage, d.h. in der sie eine maximale Fläche aufweisen. In Fig. 2 hingegen sind sie um eine zweite hier vertikale Achse zusammengefaltet und an den rechten Rand des Maschinenständers 160 verschoben, um einen Zugriff zur Spritzgießeinheit 170 z.B. für Wartung und Montage zu erlauben.

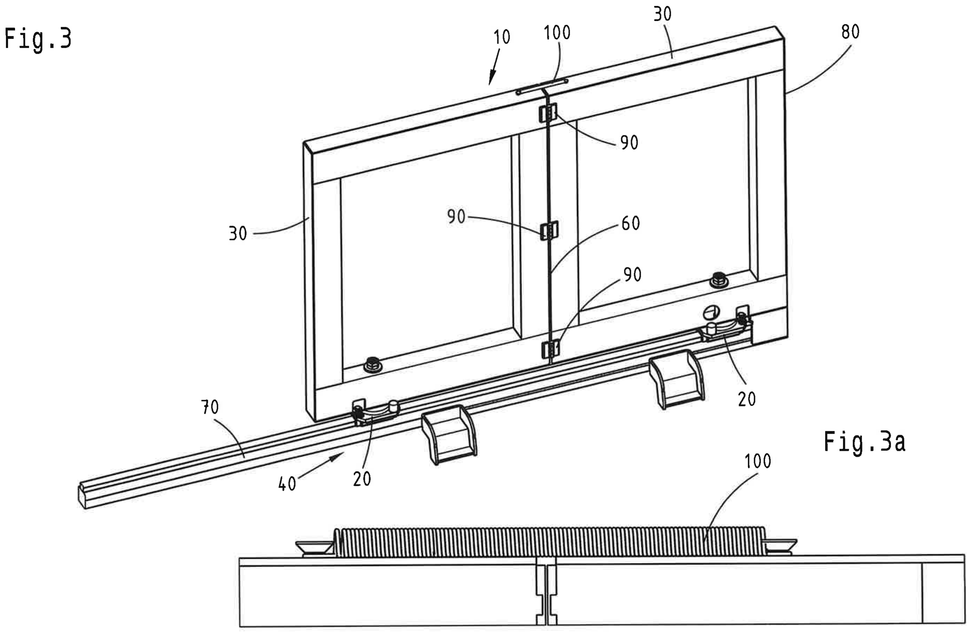

Die Fig. 3 zeigt eine Schutzabdeckung 10 für eine Maschine, insbesondere eine Spritzgießmaschine, die im Ausführungsbeispiel zwei Abdeckungssegmente 30 umfasst, aber auch mehr als zwei Abdeckungssegmente 30 aufweisen kann.. Die Schutzabdeckung 10 umfasst außerdem mindestens zwei Laufwagen 20, wobei die mindestens zwei Laufwagen 20 entlang einer ersten Achse 40 translatorisch bewegbar an einer ersten im Ausführungsbeispiel horizontalen Aufnahme 70 der Maschine lagerbar sind. D. h., dass die mindestens zwei Laufwagen 20 z. B. entlang bzw. parallel zu einer Längsachse der Maschine bewegt werden können sind.

Jeweils ein Abdeckungssegment 30 ist an jeweils einem Laufwagen 20 befestigt und jeweils um eine zweite Achse 50 im rechten Winkel zur ersten Achse 40 rotatorisch bewegbar. Im Ausführungsbeispiel sind die zweiten Achsen 50 vertikal angeordnet. Das jeweilige Abdeckungssegment 30 ist also so auf dem jeweiligen Laufwagen 20 befestigt, dass es auf dem Laufwagen 20 um eine zweiten Achse 50 gedreht werden kann, die im rechten Winkel auf der ersten Achse 40 steht, auf der der Laufwagen 20 z. B. entlang der Längsachse der Maschine bewegt werden kann.

Jeweils zwei einander benachbarte Abdeckungssegmente 30 sind entlang einer dritten Achse 60 parallel zur zweiten Achse 50 beweglich an einer Verbindung miteinander verbunden. Eines der benachbarten Abdeckungssegmente 30 ist mit einer der Verbindung der Abdeckungssegmente gegenüberliegenden Seite an einer zweiten Aufnahme 80 der Maschine lösbar lagerbar. Diese zweite Aufnahme 80 befindet sich vorzugsweise am stationären Formträger 200. Die Schutzabdeckung 10 ist damit mindestens an drei Punkten an der Maschine gelagert, nämlich mindestens an zwei in einer weitestgehend horizontalen Ebene liegenden Punkten an der ersten Aufnahme 40 über die Laufwagen 20 und mindestens an einem in einer weitestgehend vertikalen Ebene liegenden Punkt an der zweiten Aufnahme 80, wodurch sich die notwendige Stabilität der Schutzabdeckung 10 ergibt. Durch die lösbare Lagerbarkeit der Schutzabdeckung 10 an der zweiten Aufnahme 80 ist es möglich, die Abdeckungssegmente 30 der Schutzabdeckung 10 an deren ersten Aufnahme 70 translatorisch von der zweiten Aufnahme 80 weg zu bewegen, um somit dem Bediener den maximal möglichen Zugriff auf das Innere der Maschine zu gestatten.

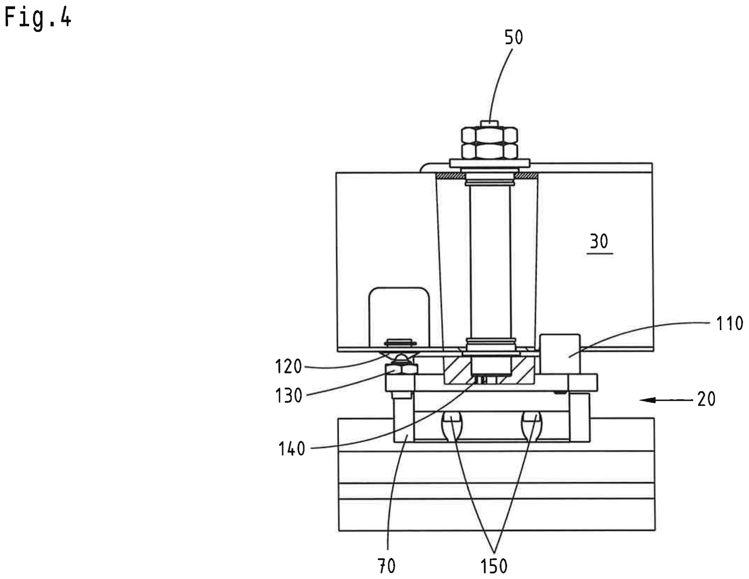

In Fig. 4 ist eine Detailvergrößerung eines Laufwagens 20 mit einem daran angeordneten Abdeckungssegment 30 abgebildet.

Vorteilhaft kann die Anzahl der Bauteile reduziert und die Bedienbarkeit verbessert werden, indem die erste Aufnahme 70 der Maschine eine gemeinsame Führung 70 für die mindestens zwei Laufwagen 20 ist, insbesondere eine Führungsschiene oder Führungsstange, wobei die mindestens zwei Laufwagen 20 vorzugsweise mittels Wälzlagern 150 an der Führung 70 bewegbar sind. Die Verbindung der Wälzlager 150 an der Führungsschiene bzw. Führungsstange kann ebenfalls lösbar sein, um z.B. einen leichten Austausch der Schutzabdeckung 10 zu ermöglichen.

Die Lösbarkeit der Schutzabdeckung 10 von der zweiten Aufnahme 80 kann dadurch verbessert werden, dass die zweite Aufnahme 80 der Maschine vorzugsweise mindestens eine Steckverbindung mit dem Abdeckungssegment 30 bildet, insbesondere eine Bolzen-/Buchsen-Verbindung.

Eine leichte und stabile gegenseitige Beweglichkeit der beiden an der Achse 60 miteinander verbundenen Abdeckungssegmente 30 kann dadurch erreicht werden, dass die jeweils zwei Abdeckungssegmente 30 mittels mindestens einem Scharnier 90 miteinander beweglich verbunden sind.

Wenn die miteinander verbundenen Abdeckungssegmente 30 zusätzlich mittels einer Feder 100 verbunden sind, die in einem Zustand vorgespannt ist, in dem die Abdeckungssegmente 30 entlang der ersten Achse 40 eine maximal große Fläche aufweisen, sich also in Schutzposition befinden, kann die Gefahr einer unerwünschten Faltung der Schutzabdeckung aus dem vollständig gefalteten Zustand vermindert werden. Der Detailausschnitt in Fig. 3 zeigt die Feder 100.

Eine Faltung der Schutzabdeckung 10 in deren vollständig entfalteten Zustand in eine unerwünschte Richtung kann dadurch vermieden werden, dass am Laufwagen 20 ein Endanschlag 110 für das Abdeckungssegment 30 angeordnet ist, an das es anschlägt, wenn die miteinander verbundenen Abdeckungssegmente 30 in einem Zustand sind, in dem die Abdeckungssegmente 30 entlang der ersten Achse 40 eine maximal große Fläche aufweisen.

Die Gefahr einer unerwünschten Faltung der Schutzabdeckung 10 im vollständig entfalteten Zustand kann dadurch vermindert werden, dass das Abdeckungssegment 30 mit einem ersten Teil 120 einer Rastverbindung am Laufwagen 20 in einem zweiten Teil 130 der Rastverbindung lösbar eingerastet ist, wenn die miteinander verbundenen Abdeckungssegmente 30 in einem Zustand sind, in dem die Abdeckungssegmente 30 entlang der ersten Achse 40 eine maximal große Fläche aufweisen.

Weiterthin kann die Gefahr einer unerwünschten Faltung der Schutzabdeckung 10 im vollständig entfalteten Zustand dadurch vermindert werden, dass das Abdeckungssegment 30 in einem Zustand, in dem es entlang der ersten Achse 40 eine maximal große Fläche aufweist, an der zweiten Achse 50 axial vorgespannt und daran rotatorisch bewegbar ist, wobei ein bedarfsweise manuell lösbarer Spannstift 140 am Laufwagen 20 ein Lösen der axialen Vorspannung verhindert.

Gemäß den Fig. 1 und 2 ist eine Spritzgießmaschine zur Verarbeitung von Kunststoffen und anderer plastifizierbarer Materialien mit solch einer Schutzabdeckung 10 ausgestattet, und zwar insbesondere im Bereich einer Spritzgießeinheit 170, im Ausführungsbeispiel auf der Bedienerseite. Durch einen Vergleich der beiden Figuren wird deutlich, dass die Schutzabdeckung 10 im zusammengefalteten Zustand der Fig. 2 einen nahezu vollständig freien Zugang zur Spritzgießeinheit 170 vor allem, aber nicht nur im vorderen Bereich der Spritzgießeinheit 170 am Plastifizierzylinder 190 gestattet. Im geschlossenen Zustand, in denen die Abdeckungssegmente 30 eine maximale Fläche aufweisen, wird der Zugangsbereich zur Spritzgießeinheit 170 der Spritzgießmaschine abgedeckt, so dass diese vorteilhaft vor einem Zugriff geschützt sicher betrieben werden kann und gleichzeitig für Wartung und Montage z.B. eines anderen Plastifizierzylinders oder zum Wechsel einer Förderschnecke schnell und leicht zugänglich ist.

### Bezugszeichenliste

- 10: Schutzabdeckung
- 20: Laufwagen
- 30: Abdeckungssegment
- 40: erste Achse
- 50: zweite Achse
- 60: dritte Achse
- 70: erste Aufnahme, Führung
- 80: zweite Aufnahme
- 90: Scharnier
- 100: Feder
- 110: Endanschlag
- 120: erster Teil einer Rastverbindung
- 130: zweiter Teil einer Rastverbindung
- 140: Spannstift
- 150: Wälzlager
- 160: Maschinenständer
- 170: Spritzgießeinheit
- 180: Formschließeinheit
- 190: Plastifizierzylinder
- 200: stationärer Formträger

## Patentansprüche

1. Schutzabdeckung (10) für eine Maschine, insbesondere Spritzgießmaschine, umfassend mindestens zwei Abdeckungssegmente (30),
**dadurch gekennzeichnet,**
**dass** die Schutzabdeckung außerdem mindestens zwei Laufwagen (20) umfasst,
**dass** die mindestens zwei Laufwagen (20) entlang einer ersten Achse (40) translatorisch bewegbar an einer ersten Aufnahme (70) der Maschine lagerbar sind,
**dass** jeweils ein Abdeckungssegment (30) der mindestens zwei Abdeckungssegmente (30) an jeweils einem Laufwagen (20) befestigt ist und jeweils um eine zweite Achse (50) im rechten Winkel zur ersten Achse (40) rotatorisch bewegbar ist,
**dass** jeweils zwei benachbarte Abdeckungssegmente (30) der mindestens zwei Abdeckungssegmente (30), die an dem jeweils einen Laufwagen (20) befestigt sind, entlang einer dritten Achse (60), die parallel zur zweiten Achse (50) angeordnet ist, beweglich miteinander über eine Verbindung verbunden sind und
**dass** eines der mindestens zwei Abdeckungssegmente (30) mit einer der Verbindung der Abdeckungssegmente gegenüberliegenden Seite an einer zweiten Aufnahme (80) der Maschine lösbar lagerbar ist.

2. Schutzabdeckung (10) nach Anspruch 1, **dadurch gekennzeichnet, dass** die erste Aufnahme (70) der Maschine eine gemeinsame Führung (70) für die mindestens zwei Laufwagen (20) ist, wobei die mindestens zwei Laufwagen (20) vorzugsweise mittels Wälzlagern (150) an der Führung bewegbar sind.

3. Schutzabdeckung (10) nach Anspruch 1 oder 2, **dadurch gekennzeichnet, dass** die zweite Aufnahme (80) der Maschine mindestens eine Steckverbindung mit dem Abdeckungssegment (30) bildet, insbesondere eine Bolzen-/Buchsen-Verbindung.

4. Schutzabdeckung (10) nach einem der vorhergehenden Ansprüche, **dadurch gekennzeichnet, dass** die jeweils zwei Abdeckungssegmente (30) an der Verbindung mittels mindestens einem Scharnier (90) miteinander beweglich verbunden sind.

5. Schutzabdeckung (10) nach einem der vorhergehenden Ansprüche, **dadurch gekennzeichnet, dass** die miteinander verbundenen Abdeckungssegmente (30) zusätzlich mittels einer Feder (100) verbunden sind, wobei die Feder (100) in einem Zustand vorgespannt ist, in dem die Abdeckungssegmente (30) entlang der ersten Achse (40) eine maximal große Fläche aufweisen.

6. Schutzabdeckung (10) nach einem der vorhergehenden Ansprüche, **dadurch gekennzeichnet, dass** am Laufwagen (20) ein Endanschlag (110) für das Abdeckungssegment (30) angeordnet ist, an das es anschlägt, wenn die miteinander verbundenen Abdeckungssegmente (30) in einem Zustand sind, in dem die Abdeckungssegmente (30) entlang der ersten Achse (40) eine maximal große Fläche aufweisen.

7. Schutzabdeckung (10) nach einem der vorhergehenden Ansprüche, **dadurch gekennzeichnet, dass** das Abdeckungssegment (30) mit einem ersten Teil (120) einer Rastverbindung am Laufwagen (20) in einem zweiten Teil (130) der Rastverbindung lösbar eingerastet ist, wenn die miteinander verbundenen Abdeckungssegmente (30) in einem Zustand sind, in dem die Abdeckungssegmente (30) entlang der ersten Achse (40) eine maximal große Fläche aufweisen.

8. Schutzabdeckung (10) nach einem der vorhergehenden Ansprüche, **dadurch gekennzeichnet, dass** das Abdeckungssegment (30) in einem Zustand, in dem es entlang der ersten Achse (40) eine maximal große Fläche aufweist, an der zweiten Achse (50) axial vorgespannt und daran rotatorisch bewegbar ist, wobei ein Spannstift (140) am Laufwagen (20) ein Lösen der axialen Vorspannung verhindert.

9. Spritzgießmaschine zur Verarbeitung von Kunststoffen und anderer plastifizierbarer Materialien mit einer Schutzabdeckung (10), **dadurch gekennzeichnet, dass** die Schutzabdeckung nach einem der Ansprüche 1 bis 8 ausgebildet ist.

10. Spritzgießmaschine nach Anspruch 9, **dadurch gekennzeichnet, dass** sie eine Spritzgießeinheit (170) aufweist, der die Schutzabdeckung (10) zugeordnet ist.
